# EUROPEAN PATENT APPLICATION

(11) **EP 3 103 667 A1**
(43) Date of publication of application: **14.12.2016**
(21) Application number: 15465521.1
(22) Date of filing: 12.06.2015
(51) Int. Cl.: B60K 15/04, B60K 15/03

(54) **VEHICLE FUEL SYSTEM**

(71) Applicant: Continental Automotive GmbH, 30165 Hannover (DE)
(72) Inventor: Gavriliu, Constantina-Elena, 325400 Caransebes (RO); Stefanuti, Iustin, 300715 Timisoara (RO); Gules, Adrian, 300708 Timisoara (RO)

(57) **Abstract**

The present invention relates to a fuel storage and analysis system for a vehicle, to a vehicle, to a method for fueling a vehicle, to a computer program element, and to a computer readable medium. In order to improve vehicle engine's safety, a fuel storage and analysis system (10) is provided. The fuel storage and analysis system (10) comprises a fuel tank (12) and a verification container (14). The verification container (14) is configured to receive an amount of fuel provided by a fuel pump nozzle (16) when a refueling process has been initiated and before the fuel tank (12) receives any fuel. The fuel within the verification container (14) is analyzed for determining whether the fuel is suitable for use in the vehicle.

## Description

### Field of the invention

The present invention relates to the field of automotive applications. In particular, this invention relates to a fuel storage and analysis system for a vehicle, to a vehicle, to a method for fueling a vehicle, to a computer program element, and to a computer readable medium.

### Background

The function of a vehicle fuel system is to store and supply fuel to the engine of a vehicle. Drivers may accidentally fill a vehicle with a wrong kind of fuel, for example, as a result of being new to the vehicle (e.g. a rented car) or simply being distracted while filling up. Putting the wrong fuel in a vehicle may cause serious damage to the vehicle's engine.

### Summary of the Invention

It is an object of the present invention to provide a vehicle fuel system with improved safety.

The object of the present invention is solved by the subject-matter of the independent claims, wherein further embodiments are incorporated in the dependent claims. It should be noted that the following described aspects of the invention apply for the fuel storage and analysis system for a vehicle, for the vehicle, for the method for fueling a vehicle, for the computer program element, and for the computer readable medium.

According to a first aspect of the invention, there is provided a fuel storage and analysis system for a vehicle. The fuel storage and analysis system comprises a fuel tank and a verification container. The verification container is configured to receive an amount of fuel provided by a fuel pump nozzle when a refueling process has been initiated and before the fuel tank receives any fuel. The fuel storage and analysis system is configured to determine whether the fuel within the verification container is suitable for use in the vehicle.

In other words, the fuel provided by the fuel pump nozzle is firstly directed to the verification container, where the fuel is tested or analyzed for determining whether the fuel is suitable for use in the vehicle. Advantageously, different fuel can be differentiated, e.g. diesel and gasoline, within the verification container before the fuel entering into the fuel tank. This may prevent the wrong fuel being added to a vehicle and thus reduce the risk of damage for vehicle components that use fuel, for example, engine, injectors, filters, pressure regulators, pumps.

A vehicle may refer to automobiles, i.e. passenger cars, but also to trucks, buses, tractors, tanks, construction machines, motorbikes, and the like.

The term "refueling process" may relate to putting the fuel pump nozzle into a vehicle's filling inlet and starting to deliver fuel into the vehicle's filling inlet.

According to an embodiment of the invention, the fuel storage and analysis system further comprises a fuel testing system. The fuel testing system comprises a sensing device and a fuel analyzing device. The sensing device is configured to provide information about at least one chemical composition of the fuel within the verification container. The fuel analyzing device is configured to determine whether the fuel is suitable for use in the vehicle based on the information provided by the sensing device.

In other words, information about fuel components and properties is acquired by the fuel testing system. The fuel testing system may be used to provide information about substances that may affect the well functioning of the vehicle, such as water, sulfur, cetane index, lead, etc. Advantageously, the engine's safety in regard to fuel chemical properties may be improved.

The sensing device may be electrochemical sensors, electrical sensors, optical sensors, and any other suitable chemical sensors.

According to an embodiment of the invention, the sensing device is an optical sensor.

For example, the optical sensor may be a fiber optic sensor and a planer waveguide based sensor.

According to an embodiment of the invention, the fuel storage and analysis system further comprises a fuel flow control arrangement. The fuel flow control arrangement is configured to direct an amount of fuel provided by a fuel pump nozzle to the verification container and to prevent the fuel tank from receiving any fuel when a refueling process has been initiated. The fuel flow control arrangement is further configured to redirect the fuel provided by the fuel pump nozzle to the fuel tank if it is determined that the fuel is suitable for use in the vehicle.

In other words, the fuel flow control arrangement (e.g. flow control valve arrangement) regulates the flow of the fuel. The fuel flow control arrangement firstly directs the fuel to the verification container, in which the fuel is analyzed. The fuel flow control arrangement responds to the analyzing results provided by the fuel analyzing device. If it is determined that the fuel is suitable for use in the vehicle, the fuel flow control arrangement redirects the fuel to the fuel tank. Advantageously, wrong-fuelling (e.g. using gasoline instead of a diesel) that may result in permanent damage to the engine may be prevented since the fuel is firstly analyzed (or tested) within the verification container and only if it is the correct fuel it should be redirected into the fuel tank.

According to an embodiment of the invention, the fuel storage and analysis system further comprises an output device. The output device is configured to provide a visual and/or acoustic indication of whether the fuel is suitable for use in the vehicle.

The output device may be a display (e.g. a LED display) that is used to visualize the analyzing results. The output device may also be an acoustic generator for generating acoustic messages indicating whether the fuel is suitable for use in the vehicle, for example, "Attention! Wrong fuel!", "Correct fuel. Please continue to add!", "Analyzing fuel. Please wait!", etc. Thanks to the alarm, a user (e.g. a driver) may not put the wrong fuel in the vehicle.

According to an embodiment of the invention, the fuel storage and analysis system further comprises a nozzle ejection device. The nozzle ejection device is configured to reject the fuel pump nozzle when it is determined that the fuel is not suitable for use in the vehicle.

For example, the fuel pump nozzle may be pushed out using the same mechanism as for full tank pump ejection. This may further prevent wrong-fuelling, even if the user is distracted while filling up. Furthermore, the fuel is prevented from flowing in the reverse direction from the full verification container to the outside.

According to an embodiment of the invention, the fuel storage and analysis system further comprises a collecting container. The fuel in the verification container is configured to be moved to the collecting container when it is determined that the fuel is not suitable for use in the vehicle.

In other words, if the fuel is determined to be the wrong fuel, the fuel within the verification container is spilled in a separate container (i.e. collecting container) that is accessible for a user, e.g. from a car's trunk. The emptied verification container can be used for receiving new fuel for further testing. The collecting container may be able to store more than one set of test liquid. The collecting container may also have some external indication of it being full or almost full.

According to an embodiment of the invention, the at least one chemical composition comprises at least one of the group of water, lead, cetane, and sulfur.

According to a second aspect of the invention, there is provided a vehicle that comprises a fuel storage and analysis system according to one of the embodiments described above and in the following.

Advantageously, misfuelling may be prevented. The risk of damaging vehicle components may also be reduced.

According to a third aspect of the invention, there is provided a method for fueling a vehicle. The method comprises the following steps:
(a) directing fuel provided by a fuel pump nozzle to a verification container.
(b) determining whether the fuel is suitable for use in the vehicle by analyzing the fuel within the verification container.

According to an embodiment of the invention, the method further comprises:
(c) when it is determined that the fuel is suitable for use in the vehicle, redirecting the fuel provided by the fuel pump nozzle to a fuel tank of the vehicle.

According to an embodiment of the invention, the method further comprises:
(d) when it is determined that the fuel is not suitable for use in the vehicle, rejecting the fuel pump nozzle.

According to a fourth aspect of the invention, there is provided a computer program element which, when being executed on one or more processors of a vehicle, instructs the vehicle to perform the method steps as recited previously.

According to a fifth aspect of the invention, there is provided a computer readable medium on which a program element as previously described is stored.

Therefore, it may be seen as a gist of the invention that a vehicle fuel storage and analysis system is provided for increasing the engine's safety. The fuel storage and analysis system starts by distributing fuel to one or a plurality of verification containers (e.g. 10 ml each), then applies different indicator solution in order to determine substances that may affect the well functioning of the vehicle, for example water, sulfur, etc. The verification container may be agitated. A sensing device may be used to provide information (e.g. concentration) about such substances. The information may be sent to a fuel analyzing device to decide whether the fuel properties are in the vehicle's known range. The analyzing results may be presented to a user, for example, by an acoustic message. A further option is to make the results visible to the user, for example, by turning on corresponding LEDs with different colors. By presenting the data on a set of LEDs one could determine the quality of the fuel based on its components and only eject the nozzle if properties are indicating huge risk, thus allowing the user to insert medium to high grade fuel if he so chooses. Advantageously, information about fuel components and properties may be obtained, thus allowing fast differentiating between different fuel, e.g. between diesel and gasoline. Thus, wrong-fuelling may be prevented. The risk of serious damage for vehicle components that use fuel may be reduced.

These and other aspects of the present invention will become apparent from and elucidated with reference to the embodiments described hereinafter.

Exemplary embodiments of the present invention will now be described in the following, with reference to the following drawings.

### Brief description of the drawings

Fig. 1 shows a schematic view of an exemplary embodiment of a fuel storage and analysis system.
Fig. 2 shows a schematic view of an exemplary embodiment of an output device.
Fig. 3 shows a schematic view of an exemplary embodiment of a vehicle.
Fig. 4 shows an exemplary embodiment of a method for fueling a vehicle.

The figures are only schematically defined and not to scale. Throughout the figures, same reference signs refer to same or similar features.

### Detailed description of the embodiments

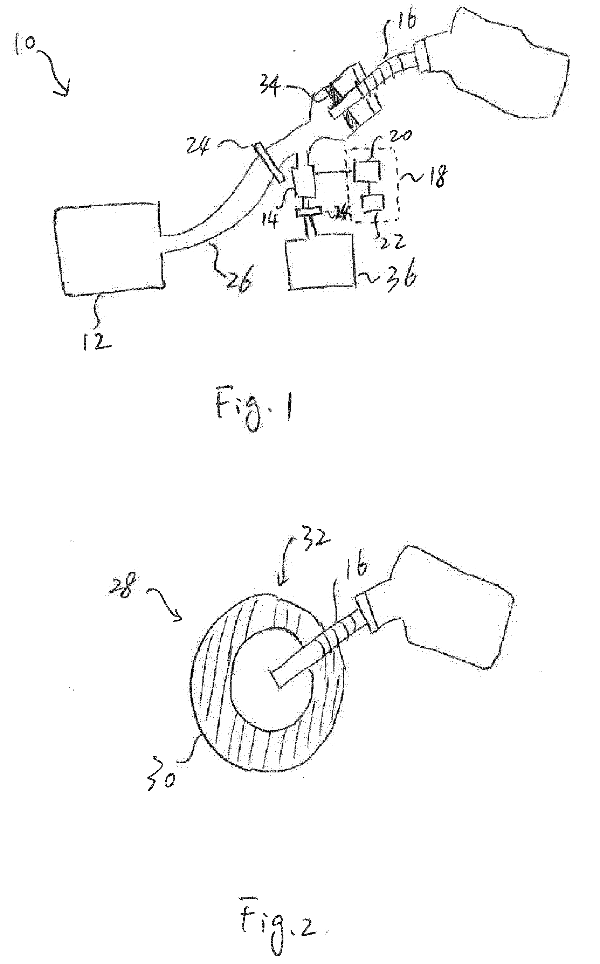

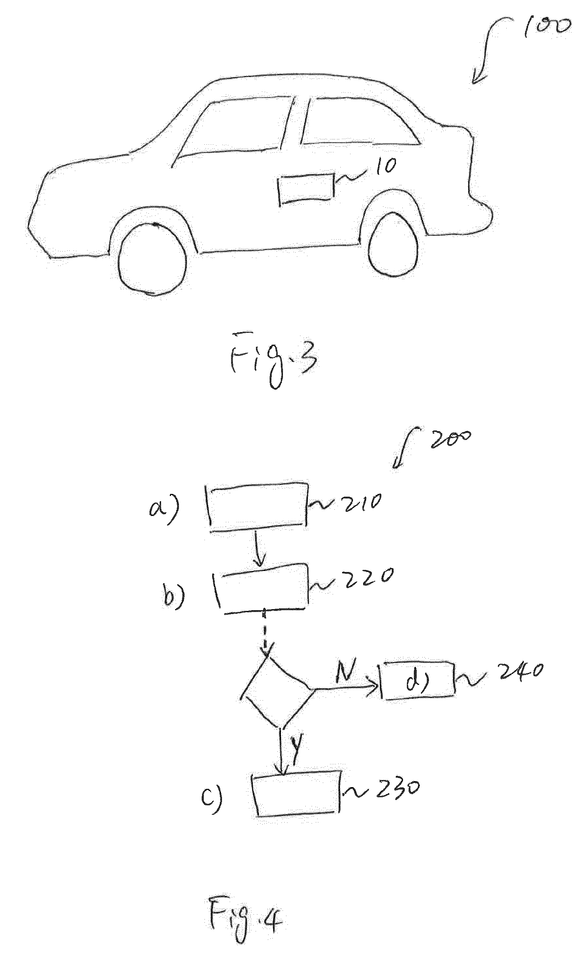

Fig. 1 shows an exemplary embodiment of a fuel storage and analysis system 10 for a vehicle 100 (see Fig. 3). The fuel storage and analysis system 10 comprises a fuel tank 12 and a verification container 14.

The verification container 14 is configured to receive an amount of fuel provided by a fuel pump nozzle 16 when a refueling process has been initiated and before the fuel tank receives any fuel. The verification container 14 may also be referred to as test container or sample container. For example, the verification container 14 may have a volume of 10ml. In a further example, the verification container may have a volume of 20 ml. If desired, the fuel storage and analysis system 10 may comprise a plurality of verification containers, e.g. two or three verification containers, each having a volume of e.g. 10 ml. In this way, the fuel within different verification containers may be used for different tests, for example, for providing information about different substances.

The fuel storage and analysis system 10 is configured to determine whether the fuel within the verification container 14 is suitable for use in the vehicle 100, which may be tested by a fuel testing system 18 that comprises a sensing device 20 and an analyzing device 22.

The sensing device 20 is configured to provide information (e.g. concentration) about at least one chemical composition of the fuel within the verification container 14. For example, the at least one chemical composition may comprise at least one of the group of water, lead, cetane index, and sulfur. For such purpose, the sensing device 20 may be provided as an optical sensor, which applies a light source, such as chemical (e.g. fluorescence), electron-stimulated (e.g. cathodoluminescence) or any other source, which emits photons for all of needed frequencies. A change of light (e.g. the intensity, phase, polarization, wavelength or transit time of light) due to the interaction with the fuel within the verification container 14 may be detected by a spectrometer, an optical detector, or any other suitable devices. It is also noted that besides optical sensors, other types of chemical sensors, such as chemical sensors based on semiconductor electronic devices, may also be used for implementing the sensing device 20.

The fuel analyzing device 22 is configured to determine whether the fuel is suitable for use in the vehicle 100 based on the information provided by the sensing device 20. For example, the fuel analyzing device 22 may be used to determine the substances that may affect the well functioning of the vehicle 100, such as water, sulfur, cetane index, lead, etc. The concentration of these substances may be analyzed and verified whether these substances are in the corresponding range of value, for example, water in the concentration range of 0 mg/kg to 200 mg/kg and sulfur in the concentration range of 0 mg/kg to 10 mg/kg or in the concentration range of 0 mg/kg to 20 mg/kg for example depending on the testing method.

Optionally, a fuel flow control arrangement 24 (not shown in detail) may be provided for directing an amount of fuel provided by a fuel pump nozzle 16 to the verification container 14 and to prevent the fuel tank 12 from receiving any fuel when a refueling process has been initiated. The fuel flow control arrangement 24 is further configured to redirect the fuel provided by the fuel pump nozzle 16 to the fuel tank 12 if it is determined that the fuel is suitable for use in the vehicle 100. For example, the fuel flow control arrangement 24 may be a flow control valve arrangement that regulates, directs or controls the flow of the fuel by opening, closing, or partially obstructing various passageways 26 (e.g. fuel filler neck). The fuel flow control arrangement 24 may communicate with the fuel analyzing device 22 and respond to the analyzing results. When a refueling process has been initiated, the fuel flow control arrangement 24 directs the fuel to the verification container 14 for testing or analyzing purposes. At the same time, the fuel flow control arrangement blocks or prevents the fuel from flowing into the fuel tank 12. Only when it is determined that the fuel is suitable for use in the vehicle 100, the fuel flow control arrangement 24 redirects the fuel provided by the fuel pump nozzle 16 to the fuel tank 12. Accordingly, the risk of wrong fueling may be reduced.

As a further option, an output device 28 may be provided that is configured to provide a visual and/or acoustic indication of whether the fuel is suitable for use in the vehicle 100. For example, the output device 28 may be a display device that makes analyzing results visible to a user (e.g. a driver), and thus provides a visual alarm for the user.

Fig. 2 shows an exemplary embodiment of the output device 28 as a LED display 30. The LED display 30 may be arranged on the vehicle's filling inlet 32. Corresponding LEDs may be turned on depending on the analyzing results received from the fuel analyzing device 22 (not shown in Fig. 2). For example, green LEDs may indicate that the fuel is suitable for use in the vehicle 100, while red LEDs may indicate that the fuel is not recommended to be used for filling, for example, if gasoline is used instead of diesel or vice-versa. Yellow LEDs may also be provided for indicating that the fuel is possibly dangerous, if the concentration of certain substances, such as water, sulfur, lead, etc., is not in the vehicle's known range.

Additionally or alternatively, the output device 28 may provide an acoustic message, for example, for positive confirming that the fuel is correct or for alarming that the fuel is wrong or dangerous. For example, "Correct fuel! Please continue to fuel your vehicle!" may be a positive confirmation of the correct fuel. "Attention. Wrong fuel! Please remove your fuel pump nozzle!" may be an acoustic alarm for indicating that the fuel is dangerous. Accordingly, even if a user is unaware of the displayed information, the user can still be alarmed if the fuel is not suitable for use in the vehicle 100 by the acoustic message.

As a further option, after data is processed, the analyzing results may also be available on the center stack inside the vehicle or on the phone, for example, sent as SMS if a user activates corresponding service.

Now referring to Fig. 1, as a further option, the fuel storage and analysis system 10 may further comprise a nozzle ejection device 34 (not shown in detail). The nozzle ejection device 34 is configured to reject the fuel pump nozzle 16 when it is determined that the fuel is not suitable for use in the vehicle 100. For example, the nozzle ejection device 34 may use the same mechanism as for full tank pump ejection. The nozzle ejection device 34 may prevent the fuel from flowing in the reverse direction from the verification container 14 to the outside, in case the verification container 14 is full and the fuel cannot be redirected to the fuel tank 12 since the fuel is not suitable for use in the vehicle 100.

Optionally, a collecting container 36 may be provided in connection with the verification container 14. The fuel within the verification container 14 may be moved or transferred to the collecting container when it is determined that the fuel is not suitable for use in the vehicle 100. The flow of the fuel from the verification container 14 to the collecting container may be controlled by the fuel flow control arrangement 24. The collecting container 36 may be accessible by a user for example from a vehicle's trunk such that the wrong fuel may be removed from the verification container 14 and collected by the collecting container 36. The emptied verification container 14 will be used for a new testing.

Fig. 3 shows an exemplary embodiment of a vehicle 100 that comprises the fuel storage and analysis system 10 according to one of the above-mentioned embodiments.

Fig. 4 shows an exemplary embodiment of basic method steps of a method 200 for fueling a vehicle.

In a first step 210, also referred to as step a), fuel provided by a fuel pump nozzle is directed to a verification container.

In a second step 220, also referred to as step b), it is determined whether the fuel is suitable for use in the vehicle 100 by analyzing the fuel within the verification container.

Advantageously, wrong-fueling may be prevented since only suitable or correct fuel is redirected to the full tank.

As a further option, when it is determined that the fuel is suitable for use in the vehicle, it is further provided: c) redirecting 230 the fuel provided by the fuel pump nozzle to the fuel tank of the vehicle.

As a further option, when it is determined that the fuel is not suitable for use in the vehicle, it is further provided: d) rejecting 240 the fuel provided by the fuel pump nozzle to a fuel tank of the vehicle.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above. According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention. It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

It has to be noted that embodiments of the present invention are described with reference to different subject-matters. In particular, some embodiments are described with reference to method type claims, whereas other embodiments are described with reference to the device type claims.

However, a person skilled in the art will gather information from the above and the foregoing description that, unless otherwise notified, in addition to any combination of features belonging to one type of subject-matter also any combination between features relating to different subject-matters is considered to be disclosed within this application.

However, all features may be combined providing synergetic effects that are more than the simple summation of the features.

While the present invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single element or unit may fulfill the functions of several items recited in the claims.

The mere fact that certain measures are recited in mutually different dependent claims does not indicate that a combination of these measures cannot be used to advantage. Any reference signs in the claims should not be construed as limiting the scope.

## Claims

1. A fuel storage and analysis system (10) for a vehicle, comprising:
a fuel tank (12); and
a verification container (14);
wherein the verification container (14) is configured to receive an amount of fuel provided by a fuel pump nozzle (16) when a refueling process has been initiated and before the fuel tank (12) receives any fuel;
wherein the fuel storage and analysis system is configured to determine whether the fuel within the verification container (14) is suitable for use in the vehicle.

2. Fuel storage and analysis system according to claim 1, further comprising a fuel testing system (18) that comprises:
a sensing device (20); and
a fuel analyzing device (22);
wherein the sensing device (20) is configured to provide information about at least one chemical composition of the fuel within the verification container (14); and
wherein the fuel analyzing device (22) is configured to determine whether the fuel is suitable for use in the vehicle based on the information provided by the sensing device (20).

3. Fuel storage and analysis system according to claim 2, wherein the sensing device (20) is an optical sensor.

4. Fuel storage and analysis system according to one of the preceding claims, further comprising a fuel flow control arrangement (24);
wherein the fuel flow control arrangement (24) is configured to direct an amount of fuel provided by a fuel pump nozzle (16) to the verification container (14) and to prevent the fuel tank (12) from receiving any fuel when a refueling process has been initiated; and to redirect the fuel provided by the fuel pump nozzle (16) to the fuel tank (12) if it is determined that the fuel is suitable for use in the vehicle.

5. Fuel storage and analysis system according to one of the preceding claims, further comprising an output device (28);
wherein the output device (28) is configured to provide a visual and/or acoustic indication of whether the fuel is suitable for use in the vehicle.

6. Fuel storage and analysis system according to one of the preceding claims, further comprising a nozzle ejection device (34);
wherein the nozzle ejection device (34) is configured to reject the fuel pump nozzle (16) when it is determined that the fuel is not suitable for use in the vehicle.

7. Fuel storage and analysis system according to one of the preceding claims, further comprising a collecting container (36) ;
wherein the fuel in the verification container is arranged to be moved to the collecting container (36) when it is determined that the fuel is not suitable for use in the vehicle.

8. Fuel storage and analysis system according to one of the preceding claims,
wherein the at least one chemical composition comprises at least one of the group of water, lead, cetane, and sulfur.

9. A vehicle (100), comprising a fuel storage and analysis system according to one of the preceding claims.

10. A method (200) for fueling a vehicle, comprising the following steps:
(a) directing (210) fuel provided by a fuel pump nozzle to a verification container; and
(b) determining (220) whether the fuel is suitable for use in the vehicle by analyzing the fuel within the verification container.

11. Method according to claim 9, further comprising:
(c) when it is determined that the fuel is suitable for use in the vehicle, redirecting (230) the fuel provided by the fuel pump nozzle to a fuel tank of the vehicle.

12. Method according to one of the claims 10 to 12, further comprising
(d) when it is determined that the fuel is not suitable for use in the vehicle, rejecting (240) the fuel pump nozzle.

13. A computer program element which, when being executed on one or more processors of a vehicle, instructs the vehicle to perform the method steps of one of claims 10 to 12.

14. A computer readable medium on which a program element according to claim 13 is stored.
